# EUROPÄISCHE PATENTSCHRIFT

(11) **EP 1 911 613 B1**
(45) Veröffentlichungstag und Bekanntmachung des Hinweises auf die Patenterteilung: **11.08.2010**
(21) Anmeldenummer: 07020038.1
(22) Anmeldetag: 12.10.2007
(51) Int. Cl.: B60G 11/46, B60G 11/10

(54) **Achsaufhängung mit zwei Radführungsfedern**
Axle suspension with two wheel guiding springs
Suspension d'essieu à deux ressorts de guidage de roue

(30) Priorität: 13.10.2006 DE 202006016061 U
(43) Veröffentlichungstag der Anmeldung: 16.04.2008
(73) Patentinhaber: Goldschmitt techmobil AG, 74746 Höpfingen (DE)
(72) Erfinder: Mairon, Markus, Dipl.-Ing., 74731 Walldürn (DE)
(74) Vertreter: Pöhner, Wilfried Anton, Dr.

(56) Entgegenhaltungen:
- EP-A- 1 574 366
- WO-A-2004/037570
- DE-C1- 4 224 965
- DE-C1- 4 232 778
- FR-A- 1 560 413
- GB-A- 2 297 732
- JP-A- 2004 306 805
- US-A1- 2005 110 233
- US-A1- 2006 103 103

## Beschreibung

Die Erfindung bezieht sich auf eine Achsaufhängung mit zwei Radführungsfedern an einem Fahrzeug, bestehend aus je einem länglichen Federstahlstreifen, der mit seinem vorderen Ende an einem ersten, vorderen Lagerbock an der Unterseite des Fahrzeuges verschwenkbar befestigt ist, dessen Verschwenkachse quer zur Fahrtrichtung und parallel zur Fahrbahnebene ausgerichtet sind, und mit seinem hinteren Ende an einer Kurzschwinge mit zwei zueinander parallelen Schwenkachsen verschwenkbar befestigt ist, die im zweiten, hinteren Lagerbock verschwenkbar gelagert ist und die Achsaufhängung etwa in der Mitte jeder Radführungsfeder befestigt ist

Gemäß aktuellem Stand der Technik sind für Fahrzeuge.sowohl die Radführung als auch die Federung unverzichtbare Elemente. Da die Fahrbahnen zum Teil sehr uneben sind, würde ein ungefedertes Fahrzeug mit starr am Fahrzeugkörper befestigten Rädern mit wachsender Geschwindigkeit proportional zunehmenden Vertikalbeschleunigungen ausgesetzt werden, die nicht nur für die Passagiere höchst unangenehm sind, sondern auch das Fahrzeug extremen Belastungen aussetzen würden. Insbesondere würde jedoch die Fahrsicherheit dramatisch reduziert werden, da große ungefederte Fahrzeugmassen durch ihre Trägheit schon bei kleinen Bodenunebenheiten den Kontakt zur Fahrbahn verlieren, wodurch das jeweils abgehobene Rad in diesem Zustand weder Seitenführungs - noch Bremsnoch Beschleunigungskräfte übertragen kann.

Ein geringer Teil der benötigten Federwirkung wird durch die luftbefüllten Reifen erreicht, der wesentliche Teil entsteht jedoch dadurch, dass die Räder, ihre Aufhängung sowie direkt daran befestigte Funktionselemente gegenüber dem Fahrzeug beweglich aufgehängt sind und über Federn mit dem Fahrzeug verbunden sind.

Auch nach aktuellem Stand der Technik sind die bewährtesten, kostengünstigsten und immer noch sehr weit verbreiteten Federelemente die Blattfedern, längliche Streifen aus Federstahl, die bogenförmig vorgespannt sind. Meist sind mehrere Blätter, die Federlagen, mit verschiedenen Längen und Vorspannungen zu einem Federpaket zusammengefasst, das durch einen gemeinsamen Herzbolzen und Federklemmen zusammengehalten wird.

In der Regel sind für jede Achse auf jeder Seite des Fahrzeuges parallel zur Fahrtrichtung ausgerichtete Blattfedern angeordnet, die am Fahrzeug befestigt werden, indem die oberste Blattfeder an ihren Enden zu je einer Zylinderhülse aufgerollt ist, in welche Gummimuffen eingepresst sind, die gelenkig an Lagerböcken an der Unterseite des Fahrzeuges befestigt sind. Da sich die Blattfeder beim Einfedern längt und kürzt, ist die hintere Zylinderhülse nicht direkt am Lagerbock befestigt, sondern über eine dazwischen eingekuppelte Kurzschwinge, die an ihrem einen Ende eine Zylinderhülse mit einer darin eingepressten Gummimuffe aufweist, die im hinteren Lagerbock am Fahrzeugboden quer zur Fahrtrichtung verschwenkbar angeordnet ist und die an ihrem anderen Ende einen quer zur Fahrtrichtung ausgerichteten Bolzen aufweist, der gelenkig in der hinteren Zylinderhülse der Blattfeder gelagert ist. Beim Ausfedern verkürzt sich die Blattfedern von oben gesehen und schwenkt dadurch die Kurzschwinge in Richtung auf das Rad. Entsprechend längt sich die Blattfeder beim Einfedern und verschwenkt dadurch die Kurzschwinge in die Gegenrichtung.

Ein Charakteristikum, insbesondere der mehrlagigen Blattfeder ist, dass sich die Federn während der Bewegung untereinander reiben. Deshalb muss beim Einfedern eine bestimmte Mindestkraft als Schwellwert überschritten werden, bevor eine Federwirkung einsetzt. Erst nach dem Überschreiten dieser Schwelle geht die (hohe) Haftreibung zwischen den einzelnen Blattfedern in die (niedrigere) Gleitreibung über, wodurch die Federwirkung jedoch in der Praxis unsensibel und stoßend wird. Zusätzlich entsteht durch die Gleitreibung zwischen den Blattfedern eine mechanische Dämpfung des Stoßes, welche zwar im Prinzip willkommen ist, da ein jedes Fahrzeug einen Stoßdämpfer ebenso dringend wie Federung und Radführung benötigt, ist jedoch in ihrer Dämpfungswirkung schwer einstellbar und stark von Fremdkörpern und Flüssigkeiten abhängig, die zwischen die Federn geraten.

Deshalb ist es Stand der Technik, durch Kunststoffplatten zwischen den einzelnen Federlagen die Reibung zu vermindern. Leider reicht das jedoch nicht für eine ganz weich ansprechende Federung ohne störende Hysterese.

Die derzeit üblichen, hydraulischen Stoßdämpfer, bei denen sich ein Kolben in einem Zylinder bewegt und die dämpfende Wirkung dadurch erreicht wird, dass Öl durch eine kalibrierte Öffnung im Kolbenboden gedrückt wird, werden auf aktuellem Stand mit so geringen Toleranzen bei Führung und Abdichtung produziert, dass ihre Dämpfungswirkung nahezu linear und nahezu frei von Losbrechkräften ist. Es sind derzeit Varianten verfügbar, deren Öldurchlassbohrung elektrisch und elektronisch von außen her verstellbar ist, also eine während der Fahrt in ihrer Charakteristik einstellbare Dämpfung. Ebenso wie die Federung ist auch die Dämpfung ein absolut unverzichtbarer Teil der Radaufhängung: zwar wird durch die federnde Aufhängung des Fahrzeugkörpers die Summe der ungefederten Massen dramatisch reduziert, es verbleibt jedoch grundsätzlich die Masse der Räder, der Radaufhängung, der Bremsen und der Radführung. Obwohl diese Massen erheblich kleiner sind als das restliche Gewicht des Fahrzeuges führen sie dennoch dazu, dass bei extremen Bodenwellen das Rad abhebt. Dabei wird die Radfeder ausgedehnt und zieht das Rad wieder nach unten auf die Fahrbahn, von wo es durch seine gespeicherte kinetische Energie abprallt und wiederum nach oben springt; das Rad gerät also in Schwingungen. Um diesen Effekt zu vermeiden, vernichten Stoßdämpfer die vertikal gerichtete Bewegungsenergie.

Zusätzlich werden möglichst schnell ansprechende Federelemente bevorzugt, die intern eine möglichst geringe Reibung aufweisen und schnell und mit geringem Aufwand auf wechselnde Beladungen des Fahrzeuges abgestimmt werden können. Nach aktuellem Stand der Technik sind dafür Luftfederungen optimal.

Relevante Achsaufhängungen sind aus WO 2004/037570, US2005/0236798, DE 433 436 P, EP 0 413 318, US 2005/0 110 233, FR 1 560 413 bekannt.

Theoretisch als Luftfeder geeignete Pneumatikzylinder weisen für diesen Verwendungszweck den Nachteil der Dichtung zwischen dem Kolben und dem umgebenden Zylinder auf. Diese Dichtung erzeugt Reibungskräfte, welche den prinzipiellen Vorteil der Luftfeder gegenüber der Blattfeder wieder zunichte machen. Zusätzlich bewirkt die Reibung einen Verschleiß, der durch langsam aufkommende Undichtigkeiten die Charakteristik des gesamten Federungssystems kontinuierlich verändert und damit laufend eine neue Abstimmung erforderlich machen würde.

Gemäß aktuellem Stand der Technik werden diese Probleme dadurch vermieden, dass als Luftfederelement ein sogenannter Rollbalg verwendet wird. Dieser besteht im Prinzip aus einem Gummischlauch mit recht großem Durchmesser, von dem ein Teil nach innen umgestülpt ist und dort auf einem Zylinder aufliegt. Der Zylinder schließt das eine Ende des Schlauches; am anderen Ende des Schlauches ist eine Abdeckplatte luftdicht angebracht. Nach der Montage wird der Innenraum unter so hohem Druck gesetzt, dass die Kraft des Rollbalges der Gegenkraft entspricht, die vom Fahrzeuggewicht ausgeübt wird. Zum Federn rollt der innere, umgestülpte Teil des Schlauches auf den inneren Zylinder ab, woraus sich die Bezeichnung "Rollbalg" ableitet. Prinzipieller Vorteil des Rollbalges ist, dass der nach innen umgestülpte Teil des Schlauches während den Federbewegungen mehr oder weniger auf dem ganz innen angeordneten Zylinder aufliegt und dabei für sich selbst nur diejenige, relativ niedrige Kraft benötigt, die zum Umstülpen des Schlauches erforderlich ist. Diese Kraft ist erheblich niedriger als die Reibungskraft bei einem Kolben. Ein weiterer Vorteil ist, dass kein laufender Verschleiß an der Dichtung auftritt, sondern der Rollbalg mit unveränderten Parametern solange arbeitet, bis das Gummi ermüdet und dann nicht allmählich wie ein Kolben, sondern schlagartig ausfällt.

Eine Rollbalgfederung kann durch Veränderung des Luftdruckes sehr schnell geänderten Lasten angepasst werden und bietet dann in allen Belastungszuständen gleichen Fahrkomfort und gleiche Fahrsicherheit. Der einzige, wesentliche Nachteil dieses Systems ist im Vergleich zu einer Blattfeder der deutlich erhöhte Aufwand, weshalb Luftfederungen heute der aktuelle Stand der Technik für PKW der Ober- und Luxusklasse sowie für anspruchsvolle Personenbeförderungssysteme wie Omnibusse und schnelle Reisezüge sind.

Wegen ihres Kostenvorteils sowie wegen ihres einfachen und robusten Aufbaus sind andererseits Starrachsen mit Blattfedern für Nutzfahrzeuge nach wie vor sehr zahlreich in Verwendung. Insbesondere für Kastenwagen oder Pkw's mit kastenförmigem Aufbau wie Kombi's oder PickUp's bietet eine Starrachse mit Blattfederung den Vorteil; dass der in den Innenraum hereinragende Radkasten im Vergleich zu anderen Radführungssystemen das geringste Volumen hat und deshalb den nutzbaren Laderaum am wenigsten einschränkt. Dabei wird der Nachteil einer schlecht ansprechenden und als stoßend eingestuften Federung in Kauf genommen. In kritischen Fahrsituationen wird dem Fahrer eines solchen Fahrzeuges mehr an Können und Geschick abverlangt als bei einer modernen Mehrlenker-Achskonstruktion.

Diese Probleme werden jedoch dann als besonders nachteilig empfunden, wenn ein Kastenwagen aus einer vor allem ökonomisch gestalteten Großserie wegen seiner Preisvorteile zu einem anspruchsvollen Personenbeförderungsfahrzeug oder zu einem Notarzt- oder Krankenwagen umgerüstet werden soll. Da diese Fahrzeuge in aller Regel mit so hohen Geschwindigkeiten auch in der Kurve bewegt werden, wie sie ansonsten nur für PKW üblich sind, reichen die Sicherheitsreserven einer blattgefederten Starrachse nicht mehr aus. Zusätzlich erfordern Kranken- und Notarztwagen einen besonders hohen Fahrkomfort, um die Verletzten zu schonen, vor allem aber um dem medizinischen Personal an Bord eine Behandlung des Patienten auch während der Fahrt zu ermöglichen und dabei auch empfindliche Geräte einsetzen zu können.

Deshalb ist es Stand der Technik, bei der Umrüstung eines Kastenwagens zu einem Krankenwagen die Blattfedern durch je einen Luftfeder-Rollbalg, einen Panhardstab und insgesamt zwei Längslenker zu ersetzen. Ein Längslenker ist ein stabförmiges Radführungselement, das parallel zur Fahrtrichtung mit einer Seite gelenkig am Fahrzeugboden und quer zur Fahrtrichtung verschwenkbar befestigt wird und mit seinem anderen Ende an die Starrachse angeschweißt wird. Anders als die Blattfeder kann ein solcher Längslenker nur sehr geringe Seitenführungskräfte übernehmen, weshalb bei der Umrüstung zusätzlich ein sogenannter Panhardstab eingebaut wird, ein längliches Element, das ebenso wie der Längslenker mit einem Ende verschwenkbar am Fahrzeugboden befestigt wird, jedoch quer zur Fahrtrichtung ausgerichtet ist und mit seinem anderen Ende gelenkig am Hinterachskörper montiert wird.

Ein Nachteil des Panhardstabes ist, dass er während der Verschwenkung ein Kreisbogensegment beschreibt, woraus in Bezug auf die Fahrbahn ein seitlicher Versatz des Fahrzeuges resultiert. Diese Bewegungen werden nicht nur von den Fahrgästen als unangenehm und unkomfortabel eingestuft, sondern vermindern auch die maximal übertragbaren Seitenführungskräfte der Räder. Gemäß aktuellem Stand der Technik ist ihr gravierendster Nachteil jedoch, dass die vom Panhardstab erzeugten, relativ abrupt auftretenden, seitlichen Stöße so stark sind, dass sie die im Fahrzeug eingebauten Beschleunigungssensoren aktivieren. Diese Sensoren sind Teil des ESP-Systems, des Elektronischen Stabilisierungs-Programms, das bei der Überschreitung von Beschleunigungsgrenzwerten in Längsrichtung, in Querrichtung sowie um die Hochachse des Fahrzeuges durch selektive Einzelansteuerung der Bremsen dafür sorgt, dass das Fahrzeug stabilisiert wird. So wird z.B. bei einer zu schnell gefahrenen Kurve und drohendem Ausbrechen des Fahrzeughecks das kurvenäußere Vorderrad abgebremst und dadurch ein Drehmoment auf das Fahrzeug erzeugt, welches der Richtung des drohenden Ausbrechens entgegengerichtet ist.

Bei geradeaus schnell überfahrenen, scharfen Bodenwellen wird ein Fahrzeug mit Panhardstab einer ebenso heftigen, seitlich gerichteten Beschleunigung ausgesetzt. Wenn dieser Beschleunigungswert so hoch ist, dass der entsprechende Sensor anspricht, kann dadurch das ESP-System aktiviert werden, welches darauf hin die Bremse an einem Vorderrad aktivieren kann. Dieser Bremseneingriff ist jedoch ebenso unsinnig wie unerwünscht und kann im Extremfall dazu führen, dass das Fahrzeug seitlich stark beschleunigt wird und in eine unkontrollierbare Situation gerät.

Bei gerader Fahrt auf verhältnismäßig ebenen Straßen wird jedoch bereits mit den bisher bekannten Radführungen der durch die Luftfederung erhoffte Zugewinn an Fahrsicherheit und Fahrkomfort erreicht.

Auf diesem Hintergrund hat sich die Erfindung die Aufgabe gestellt, bei der Umrüstung von Fahrzeugen mit blattgefederten Starrachsen auf Luftfederung ein Radführungssystem zu schaffen,
- das an den für die Blattfeder serienmäßig vorgesehenen Lagerblöcken angelenkt werden kann,
- das den Einbauraum und einen Befestigungspunkt für den Luftfederbalg schafft
- das eine sichere Übertragung der Anfahr- und Bremskräfte ermöglicht
- das eine ausreichende und auch während des Einfederns spurkonstante, seitliche Führung sicherstellt
- das eine möglichst geringe, innere Reibung aufweist
- das ein möglichst niedriges Eigengewicht hat
- das bei Ausfall des Luftfederbalges noch als Notfederung dient
- dass in den serienmäßig im Radkasten vorgesehenen Einbauraum hineinpasst.

Als Lösung schlägt die Erfindung den Ersatz der Blattfeder durch eine Radführungsfeder vor, die dadurch gekennzeichnet ist, dass die Radführungsfeder nahe zur Mitte in Querrichtung zweifach abgekantet ist, wobei die beiden Abkantungen gegensinnig zueinander verlaufen und der dadurch abgegrenzte Vertikalbereich der Radführungsfeder etwa senkrecht zur Fahrbahnebene ausgerichtet ist, während das Vorderteil und das Rückteil der Radführungsfeder etwawaagerecht zur Fahrbahnebene verlaufen.

Das wichtigste Merkmal der Erfindung ist, dass die Radführungsfeder im Normalbetrieb fast keine Federungsaufgaben übernimmt, sondern fast ausschließlich auf die Führung der Räder konzentriert ist. Die Federung wird fast ganz von dem zusätzlichen Luftfederbalg übernommen. Die Radführungsfeder wird an den serienmäßig vorhandenen und für die Blattfeder ausgelegten Lagerböcken befestigt, wobei die zwischen dem hinteren Lagerbock und der Blattfeder zwischengeschaltete Kurzschwinge beibehalten wird.

Von der Seite her gesehen grenzt an den etwa in der Mitte angeordneten Vertikalbereich der Radführungsfeder nach vorne hin das etwa waagerecht angeordnete Vorderteil und nach hinten zu das ebenfalls etwa waagerecht angeordnete Rückteil. Dadurch ergibt sich, dass entweder das Vorder- oder das Rückteil einen größeren Abstand zur Fahrzeugunterseite aufweist, als das andere am Vertikalbereich angrenzende Teil. Dieser Abstand ist insbesondere deutlich größer als bei der serienmäßigen Blattfeder. Dadurch entsteht zusätzlicher Einbauraum, in welchen der Luftfederrollbalg eingesetzt werden kann. Die Luftfeder wird mit ihrem einen Ende auf der Radführungsfeder befestigt und mit ihrem anderen Ende an der Fahrzeugunterseite oder an einer Befestigungskonsole im Radkasten. Die Schaffung dieses Befestigungspunktes ist die einzige Veränderung am Fahrzeug selbst.

Die bei bisher üblichen Umrüstungen auf Luftfederung erforderlichen Befestigungspunkte für die beiden Längslenker sowie den Panhardstab an der Fahrzeugunterseite sind mit den erfindungsgemäßen Radführungsfedern nicht mehr erforderlich.

Ein weiterer Vorteil der erfindungsgemäßen Radführungsfeder im Vergleich zu bisher üblichen Blattfederpaketen ist, dass die einstückige Radführungsfeder beim Einfedern keine interne Reibung verursacht, wie sie zwischen den einzelnen Elementen eines Blattfederpaketes entsteht.

Gegenüber bisherigen Umrüstungen ist es auch ein Vorteil, dass an der Starrachse selbst keine Veränderungen vorgenommen werden müssen; insbesondere die Schaffung der Anlenkpunkte für Längslenker und Panhardstab entfallen. Im Vergleich zu einem konventionellen Blattfederpaket ist die erfindungsgemäße Radführungsfeder erheblich leichter, wodurch sich das Gesamtgewicht der ungefederten Massen deutlich reduziert. Dadurch reduziert sich auch die Eigenfrequenz des zu federnden Systems deutlich. In praktischen Versuchen wies ein Fahrzeug mit Blattfedern und Starrachse eine Eigenfrequenz von 1,4 Hertz auf, die durch den Umbau auf eine Radführungsfeder mit Luftfederung auf 1,0 Hertz reduziert werden konnte.

Ein weiterer Vorzug des physikalischen Wirkungsprinzips der Radführungsfeder ist es, dass bei kurzen harten Stößen auf die Räder, wie sie z.B. beim Überfahren von Schlaglöchern entstehen, der daraus resultierende Impuls nicht nur in eine vertikale Bewegung der Hinterachse umgesetzt wird, sondern zu einem Teil in eine Schwenkbewegung um den Mittelpunkt der Achsaufhängung umgewandelt wird, was dadurch ermöglicht wird, dass die erfindungsgemäße Radführungsfeder im Vergleich zu einer Blattführungsfeder weicher aufgebaut ist und deshalb eine vergleichsweise stärkere Krümmung des Vorderteiles der Radführungsfeder zulässt.

Dennoch ist der Vorderteil der Radführungsfeder ausreichend steif, um die beim Bremsen auftretenden Kräfte auf das Fahrzeug übertragen zu können, ohne sich dabei all zu stark zu längen und auch ausreichend stark genug ist, um die bei der Beschleunigung wirkenden Schubkräfte ohne all zu starke eigene Krümmung auf das Fahrzeug zu übertragen.

In einer vorteilhaften Ausführungsvariante werden das Vorderteil und/oder das Rückteil der Radführungsfeder vor dem Einbau gekrümmt, wodurch der Kraftverlauf beim Einfedern weiter linearisiert wird und die Seitenführungseigenschaften der Radführungsfeder verbessert werden.

Für eine weitere Optimierung schlägt die Erfindung vor, dass das Rückteil einen kleineren Querschnitt aufweist als das Vorderteil der Radführungsfeder. Dadurch wird die Stabilität bei der Übertragung von Brems- und Beschleunigungskräften erhöht und zugleich die Charakteristik der Gesamtfederung dadurch verbessert, dass die Radführungsfeder beim Einfedern noch weniger Gegenkräfte aufbringt.

In einer weiteren, vorteilhaften Ausführungsform weist das Rückteil und/oder das Vorderteil einen von der Mitte nach hinten zu abnehmenden Querschnitt auf, wodurch die Stabilität der Verbindung zwischen Vorderteil und Vertikalteil sowie Rückteil und Vertikalteil weiter erhöht wird und damit die Seitenführung der Achse weiter verbessert wird. Zusätzlich bringt die Radführungsfeder zu Beginn des Einfederns eine weiter reduzierte Gegenkraft auf, was das Ansprechverhalten der Federung verbessert.

Die Radführungsfeder ist vor allem dafür gedacht, beim Umbau einer blattgefederten Starrachse auf Luftfederung die Blattfeder zu ersetzen und fast nur als Radführung zu wirken. Denkbar ist eine gleichartige Kombination mit einer Schraubenfeder. Diese zeigt zwar auch im Vergleich zu einer Blattfeder ein verbessertes Ansprechverhalten, ist jedoch in ihren Federungseigenschaften einer Luftfeder unterlegen, sodass die Kombination einer Radführungsfeder mit einem Luftfederelement von der Erfindung eindeutig bevorzugt wird.

Zur weiteren Verbesserung des Ansprechverhaltens der Federung schlägt die Erfindung vor, dass anstelle der meist zur Verbindung von Blattfeder und Lagerbock bzw. Kurzschwinge und Lagerbock verwendeten Gummielemente Gleitlager eingesetzt werden, die keine Losbrechmomente erfordern und deshalb das Ansprechverhalten der Federung weiter verbessern. Für eine weitere Optimierung ist es sinnvoll, anstelle der Gleitlager, Kugellager oder Rollenlager einzusetzen, da sie nochmals reduzierte Losbrechdrehmomente erfordern und deshalb im Sinne einer Verbesserung der Federungscharakteristik zu bevorzugen sind.

Ebenso ist auch die Lagerung der Kurzschwinge mit wenigstens einem Gleitlager oder noch besser einem Kugel- oder Rollenlager zu bevorzugen.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- **Figur 1**: Schrägbild einer Radführungsfeder mit Achsaufhängung, Luftfeder und Kurzschwinge in einem aufgeschnittenen Fahrzeug
- **Figur 2a**: Aufsicht auf eine Radführungsfeder
- **Figur 2b**: Seitenansicht einer Radführungsfeder
- **Figur 2c**: Stirnansicht einer Radführungsfeder

### Die Figuren zeigen im Einzelnen:

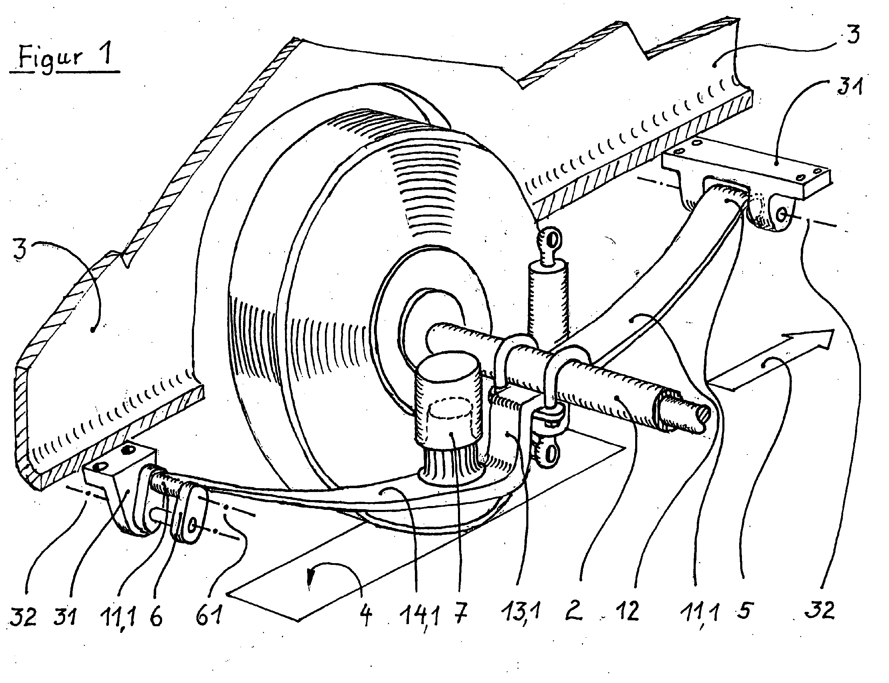

In **Figur 1** ist im Schrägbild eine Radführungsfeder 1 zu sehen, die von links nach rechts gesehen aus einer Zylinderhülse 11, einem Rückteil 14 in etwa waagerechter Position, einem Vertikalteil in etwa senkrechter Position, einem Vorderteil 12 sowie einer weiteren Zylinderhülse 11 am anderen Ende besteht. Das in Figur 1 gezeigte Beispiel weist einen Rückteil 14 auf, der nahe zur Mitte der Radführungsfeder 1 deutlich tiefer positioniert ist als das Vorderteil 12. Deshalb ist auf dem Rückteil 14 unterhalb des - hier nicht gezeichneten Fahrzeugbodens - Einbauraum für eine Luftfeder 7 mit ihrem Rollbalg. Am hinteren Ende des Rückteils 14 ist die Kurzschwinge 6 angelenkt, die ihrerseits wieder am hinteren Lagerbock 31 verschwenkbar angelenkt ist. Der hintere Lagerbock 31 besteht aus zwei gleichen, einander gegenüberstehenden Lagerbockhälften, von denen in Figur 1 nur der äußere gezeichnet ist.

In Figur 1 ist zu erkennen, dass die Kurzschwinge 6 von der Verschwenkachse 32 aus nach oben weist, also auf Zug beansprucht wird und am oberen Ende um die Verschwenkachse 61 verschwenbar mit der Zylinderhülse 11 am hinteren Ende der Radführungsfeder 1 verbunden ist.

In Figur 1 lässt sich die Weiterleitung der Kräfte verfolgen, die bei kurzen, harten impulsartigen Stößen auf das Rad 8 und damit auf die Achsaufhängung 2 entstehen. Der senkrecht gerichtete Teil dieser Kraft hebt die Achsaufhängung 2 an und damit auch den mittleren Bereich der Radführungsfeder, welcher über den Vertikalbereich 13 und das Rückteil 14 mit der Luftfeder 7 verbunden ist, welche durch den weitergeleiteten, vertikalen Teil der Impulskraft angehoben wird. Der horizontal gerichtete Anteil dieser Impulskraft drückt über die Starrachse 2 auf das Ende des Vorderteiles 12 der Radführungsfeder und damit auf den Vertikalbereich 13. Dadurch wird das Vorderteil 12 gelängt und der Vertikalbereich 13 schwenkt etwas um eine quer zur Fahrtrichtung ausgerichtete Achse. Dadurch wird der Stoß sofort in eine tordierende Bewegungskomponente der Achsaufhängung 2 umgewandelt und auf diese Weise weiter abgebaut. Dabei bleibt jedoch die Federwirkung des Luftrollbalgs der Luftfeder 7 unverändert funktionstüchtig. Aus diesem Effekt ist ersichtlich, dass kleine, aber harte Stöße auf ein Fahrzeug mit erfindungsgemäßer Radführungsfeder 1 sofort nach deren Auftreten umgewandelt und abgebaut werden.

In Figur 1 ist die Fahrtrichtung 5 mit einem Pfeil bezeichnet, der in der Ebene der Fahrbahn 4 eingetragen ist. In Figur 1 ist von der Fahrbahn 4 nur ein streifenförmiger Ausschnitt wieder gegeben, auf welchem in sich die Lauffläche des Rades 8 bewegt.

In Figur 1 ist ebenfalls der hydraulische Stoßdämpfer eingezeichnet, der zwischen der Achsaufhängung 2 und dem Fahrzeugboden angeordnet ist, jedoch ohne die obere Aufhängung.
Ebenfalls ohne obere Aufhängung ist die Luftfeder 7 eingetragen.

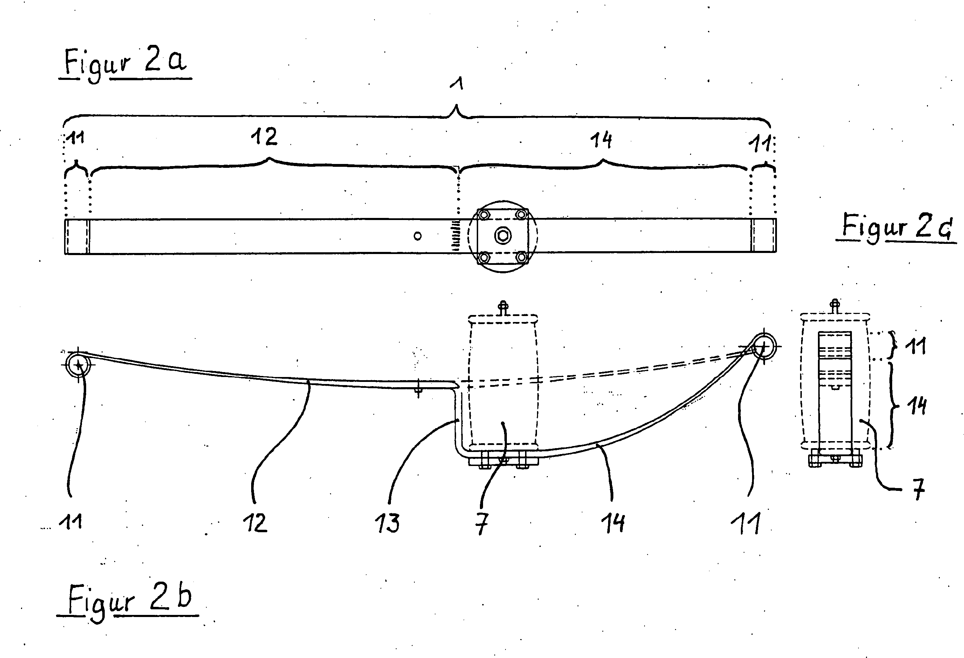

In **Figur 2** ist eine erfindungsgemäße Radführungsfeder 1 in der Aufsicht (Figur 2a) in der Seitenansicht (Figur 2b) sowie in der Stirnansicht (Figur 2c) wiedergegeben. In den Figuren 2a und 2b ist ganz schnell erkennbar, dass die Radführungsfeder 1 in dieser Reihenfolge von vorn nach hinten aus der Zylinderhülse 11 und dann dem Vorderteil 12 besteht an welchen sich der Vertikalbereich 13 anschließt und nach Abkantung in den Rückteil 14 übergeht, der in einer zweiten Zylinderhülse 11 ausläuft.

In Figur 2b ist mit gestrichelter Linie die Seitenansicht einer herkömmlichen Blattfeder eingezeichnet. Durch den Vergleich dieser Linie mit dem neuen Rückteil 14 wird deutlich, dass der mögliche Einbauraum für eine Luftfeder 7 durch die erfindungsgemäße Linienführung verdoppelt wird.

Gleichzeitig wird in der Aufsicht (Figur 2a) erkennbar, dass von oben her gesehen keine Abweichung zur standardmäßigen Blattfeder erkennbar ist. Dieser Vergleich macht plausibel, dass die erfindungsgemäße Radführungsfeder 1 eine ähnlich gute Seitenführung aufbringt, wie eine gleich große Blattfeder.

In Figur 2b ist die Ausführungsvariante gezeichnet, bei der sowohl das Vorderteil 12 als auch das Rückteil 14 nahe der Mitte einen sehr viel größeren Querschnitt aufweisen als nahe den äußeren Zylinderhülsen 11. Die Figur 2b lässt nachvollziehbar werden, dass dadurch das Ansprechverhalten der Federung bei kleinen Bewegungen verbessert wird und andererseits durch die relative Stärkung des Mittelteils die Stabilität der Radführungsfeder 1 gegenüber seitlich auftreffenden Kräften wächst.

### Bezugszeichenliste

- 1: Radführungsfeder, zwischen Achsaufhängung 2 und Fahrzeug 3
- 11: Zylinderhülse, an den Enden der Radführungsfeder 1
- 12: Vorderteil der Radführungsfeder 1, etwa waagerecht zur Fahrbahnebene 4
- 13: Vertikalbereich 13, etwa in der Mitte der Radführungsfeder 1, etwa senkrecht zur Fahrbahnebene 4
- 14: Rückteil der Radführungsfeder 1, etwa waagerecht zur Fahrbahnebene 4
- 2: Achsaufhängung , an Fahrzeug 3
- 3: Fahrzeug
- 31: Lagerbock, an Unterseite des Fahrzeuges 3 befestigt
- 32: Verschwenkachse des Lagers im Lagerbock 31
- 5: Fahrtrichtung des Fahrzeuges 3
- 4: Fahrbahnebene für Fahrzeug 3
- 6: Kurzschwinge, zwischen hinterem Lagerbock 31 und hinterer Zylinderhülse 11 der Radführungsfeder 1
- 61: Schwenkachsen an Kurzschwinge 6
- 7: Luftfeder, zwischen Radführungsfeder 1 und Fahrzeug 3
- 8: Rad, an Achsaufhängung 2

## Patentansprüche

1. Achsaufhängung 2 mit zwei Radführungsfedern 1 an einem Fahrzeug 3, bestehend aus je einem länglichen Federstahlstreifen, der
- mit seinem vorderen Ende an einem ersten, vorderen Lagerbock 31 an der Unterseite des Fahrzeuges 3 verschwenkbar befestigt ist, dessen Verschwenkachse 32 quer zur Fahrtrichtung 5 und parallel zur Fahrbahnebene 4 ausgerichtet sind, und
- mit seinem hinteren Ende an einer Kurzschwinge 6 mit zwei zueinander parallelen Schwenkachsen 61 verschwenkbar befestigt ist, die im zweiten, hinteren Lagerbock 31 verschwenkbar gelagert ist
und die Achsaufhängung 2 etwa in der Mitte jeder Radführungsfeder befestigt ist,
**dadurch gekennzeichnet, dass** die Radführungsfeder 1 nahe zur Mitte in Querrichtung zweifach abgekantet ist, wobei die beiden Abkantungen gegensinnig zueinander verlaufen und
- der **dadurch** abgegrenzte Vertikalbereich 13 der Radführungsfeder 1 etwa senkrecht zur Fahrbahnebene 4 ausgerichtet ist,
- während das Vorderteil 12 und das Rückteil 14 der Radführungsfeder 1 etwa waagerecht zur Fahrbahnebene 4 verlaufen.

2. Achsaufhängung 2 mit zwei Radführungsfedern 1 nach dem vorhergehenden Anspruch, **dadurch gekennzeichnet, dass** die Radführungsfeder 1 an beiden Enden zu je einer Zylinderhülse 11 aufgerollt ist.

3. Achsaufhängung 2 mit zwei Radführungsfedern 1 nach dem vorhergehenden Anspruch, **dadurch gekennzeichnet, dass** die in Fahrtrichtung 5 vordere Zylinderhülse 11 an dem vorderen Lagerbock 31 befestigt ist und die hintere Zylinderhülse 11 an der Kurzschwinge 6 befestigt ist.

4. Achsaufhängung 2 mit zwei Radführungsfedern 1 nach einem der vorhergehenden Ansprüche, **dadurch gekennzeichnet, dass** beide Lagerböcke 31 auf etwa gleicher Höhe über der Fahrbahnebene 4 und in Fahrtrichtung 5 hintereinander angeordnet sind.

5. Achsaufhängung 2 mit zwei Radführungsfedern 1 nach einem der vorhergehenden Ansprüche, **dadurch gekennzeichnet, dass** das Vorderteil 12 der Radführungsfeder 1 im entspannten Zustand leicht gekrümmt ist.

6. Achsaufhängung 2 mit zwei Radführungsfedern 1 nach einem der vorhergehenden Ansprüche, **dadurch gekennzeichnet, dass** das Rückteil 14 der Radführungsfeder 1 im entspannten Zustand leicht gekrümmt ist.

7. Achsaufhängung 2 mit zwei Radführungsfedern 1 nach einem der vorhergehenden Ansprüche, **dadurch gekennzeichnet, dass** das Rückteil 14 einen kleineren Querschnitt aufweist als das Vorderteil 12.

8. Achsaufhängung 2 mit zwei Radführungsfedern 1 nach einem der vorhergehenden Ansprüche, **dadurch gekennzeichnet, dass** das Rückteil 14 und/oder das Vorderteil 12 einen von der Mitte nach hinten zu abnehmenden Querschnitt aufweist.

9. Achsaufhängung 2 mit zwei Radführungsfedern 1 nach einem der vorhergehenden Ansprüche, **dadurch gekennzeichnet, dass** eine Luftfeder 7 zwischen dem Fahrzeug 3 und dem mittleren Bereich der Radführungsfeder 1 angeordnet ist.

10. Achsaufhängung 2 mit zwei Radführungsfedern 1 nach einem der vorhergehenden Ansprüche, **dadurch gekennzeichnet, dass** eine Schraubenfeder zwischen dem Fahrzeug 3 und dem mittleren Bereich der Radführungsfeder 1 angeordnet ist.

11. Achsaufhängung 2 mit zwei Radführungsfedern 1 nach einem der vorhergehenden Ansprüche, **dadurch gekennzeichnet, dass** die Zylinderhülse 11 gegen den Lagerbock 31 auf einem Gleitlager verschwenkbar ist.

12. Achsaufhängung 2 mit zwei Radführungsfedern 1 nach einem der vorhergehenden Ansprüche, **dadurch gekennzeichnet, dass** die Zylinderhülse 11 gegen den Lagerbock 31 mit einem Kugellager oder Rollenlager verschwenkbar ist.

13. Achsaufhängung 2 mit zwei Radführungsfedern 1 nach einem der vorhergehenden Ansprüche, **dadurch gekennzeichnet, dass** die Kurzschwinge 6 am rückseitigen Lagerbock 31 und/oder in der rückseitigen Zylinderhülse 11 auf einem Gleitlager verschwenkbar ist.

14. Achsaufhängung 2 mit zwei Radführungsfedern 1 nach einem der vorhergehenden Ansprüche, **dadurch gekennzeichnet, dass** die Kurzschwinge 6 am rückseitigen Lagerbock 31 und/oder in der rückseitigen Zylinderhülse 11 auf einem Kugellager oder Rollenlager verschwenkbar ist.

## Claims

1. Axle suspension 2 comprising two wheel-guide springs 1 on a vehicle 3, consisting of, in each case, an elongated spring-steel strip, which,
- is pivotably fixed by its front end on a first, front bearing block 31, on the underside of the vehicle 3, the pivot axis 32 of which is oriented transversely to the direction of travel 5 and parallel to the road plane 4, and
- is pivotably fixed by its rear end on a short rocker 6, which has two mutually parallel pivot axes 61 and is mounted in the second, rear bearing block 31
- and the axle suspension 2 is fixed approximately in the centre of each wheel-guide spring 1,
**characterised in that** the wheel-guide spring 1 is doubly angled, close to its centre, in the transverse direction, the two angles extending in opposite directions to one another, and
- the vertical region 13 of the wheel guide spring, which is delimited thereby, is aligned approximately perpendicular to the road plane 4
- while the front part 12 and rear part 14 of the wheel guide spring 1 run approximately perpendicular to the road plane 4.

2. Axle suspension 2 comprising two wheel-guide springs 1 according to the preceding claim, **characterised in that** the wheel guide spring 1 is rolled up at both ends to form a cylindrical sleeve 11 in each case.

3. Axle suspension 2 comprising two wheel-guide springs 1 according to the preceding claim, **characterised in that** the front cylindrical sleeve 11, seen in the direction of travel 5, is fixed on the front bearing block 31 and the rear cylindrical sleeve 11 is fixed on the short rocker 6.

4. Axle suspension 2 comprising two wheel-guide springs 1 according to one of the preceding claims, **characterised in that** both bearing blocks 31 are arranged at approximately the same height above the road plane 4 and one behind the other in the direction of travel 5.

5. Axle suspension 2 comprising two wheel-guide springs 1 according to one of the preceding claims, **characterised in that** the front portion 12 of the wheel guide spring 1 is slightly curved in the relaxed state.

6. Axle suspension 2 comprising two wheel-guide springs 1 according to one of the preceding claims, **characterised in that** the rear portion 14 of the wheel guide spring 1 is slightly curved in the relaxed state.

7. Axle suspension 2 comprising two wheel-guide springs 1 according to one of the preceding claims, **characterised in that** the rear portion 14 has a smaller cross-section than the front portion 12.

8. Axle suspension 2 comprising two wheel-guide springs 1 according to one of the preceding claims, **characterised in that** the rear portion 14 and/or the front portion 12 has a cross-section that decreases from the centre towards the rear.

9. Axle suspension 2 comprising two wheel-guide springs 1 according to one of the preceding claims, **characterised in that** an air spring 7 is disposed between the vehicle 3 and the central portion of the wheel-guide spring 1.

10. Axle suspension 2 comprising two wheel-guide springs 1 according to one of the preceding claims, **characterised in that** a helical spring is disposed between the vehicle 3 and the central portion of the wheel-guide spring 1.

11. Axle suspension 2 comprising two wheel-guide springs 1 according to one of the preceding claims, **characterised in that** the cylindrical sleeve 11 is pivotable on a sliding bearing with respect to the bearing block 31.

12. Axle suspension 2 comprising two wheel-guide springs 1 according to one of the preceding claims, **characterised in that** the cylindrical sleeve 11 is pivotable with respect to the bearing block 31 with a ball bearing or roller bearing.

13. Axle suspension 2 comprising two wheel-guide springs 1 according to one of the preceding claims, **characterised in that** the short rocker 6 is pivotable on the rear bearing block 31 and/or in the rearward cylindrical sleeve 11 on a sliding bearing.

14. Axle suspension 2 comprising two wheel-guide springs 1 according to one of the preceding claims, **characterised in that** the short rocker 6 is pivotable on the rear bearing block 31 and/or in the rearward cylindrical sleeve 11 on a ball bearing or roller bearing.

## Revendications

1. Suspension d'axe 2 avec deux ressorts de guidage de roue 1 sur un véhicule 3, chacune composée d'une bande en acier de ressort qui
■ est fixée de façon pivotante, à son extrémité avant, à un premier support de palier avant 31 sur la face inférieure du véhicule 3, dont l'axe de pivotement 32 est orienté dans le sens perpendiculaire par rapport au sens de la marche 5 et parallèlement au niveau de la voie 4, et
■ est fixée de façon pivotante à son extrémité arrière à une bielle oscillante courte 6 avec deux axes de pivotement 61 parallèles l'un par rapport à l'autre, qui sont montés sur roulement à pivotement dans le deuxième support de palier arrière 31,
la suspension d'axe 2 étant fixée à peu près au milieu de chaque ressort de guidage de roue 1,
**caractérisée par le fait que** le ressort de guidage de roue 1 est, près du milieu, doublement chanfreiné dans le sens transversal, sachant que les deux chanfreins suivent un cheminement inverse l'un par rapport à l'autre et
■ que la zone verticale ainsi délimitée 13 du ressort de guidage de roue 1 est orientée à peu près à la verticale par rapport au niveau de la voie 4,
■ tandis que la partie avant 12 et la partie arrière 14 du ressort de guidage de roue 1 suit un cheminement à peu près horizontal par rapport au niveau de la voie 4.

2. Suspension d'axe 2 avec deux ressorts de guidage de roue 1 selon la revendication précédente, **caractérisée par le fait que** chacune des deux extrémités du ressort de guidage de roue 1 est enroulé sur une douille cylindrique 11.

3. Suspension d'axe 2 avec deux ressorts de guidage de roue 1 selon la revendication précédente, **caractérisée par le fait que** la douille cylindrique avant 11 dans le sens de la marche 5 est fixée au support de palier 31 et que la douille cylindrique arrière 11 est fixée à la bielle oscillante courte 6.

4. Suspension d'axe 2 avec deux ressorts de guidage de roue 1 selon une des revendications précédentes, **caractérisée par le fait que** les deux supports de palier 31 sont disposés l'un derrière l'autre, à peu près à la même hauteur au dessus du niveau de la voie 4 et dans le sens de la marche 5.

5. Suspension d'axe 2 avec deux ressorts de guidage de roue 1 selon une des revendications précédentes, **caractérisée par le fait que** la partie avant 12 du ressort de guidage de roue 1 est légèrement recourbée lorsqu'elle est détendu.

6. Suspension d'axe 2 avec deux ressorts de guidage de roue 1 selon une des revendications précédentes, **caractérisée par le fait que** la partie arrière 14 du ressort de guidage de roue 1 est légèrement recourbée lorsqu'elle est détendu.

7. Suspension d'axe 2 avec deux ressorts de guidage de roue 1 selon une des revendications précédentes, **caractérisée par le fait que** la partie arrière 14 présente une section plus petite que la partie avant 12.

8. Suspension d'axe 2 avec deux ressorts de guidage de roue 1 selon une des revendications précédentes, **caractérisée par le fait que** la partie arrière 14 et/ou la partie avant 12 présente une section qui diminue du milieu vers l'arrière.

9. Suspension d'axe 2 avec deux ressorts de guidage de roue 1 selon une des revendications précédentes, **caractérisée par le fait qu'**un coussin d'air 7 est disposé entre le véhicule 3 et la zone médiane du ressort de guidage de roue 1.

10. Suspension d'axe 2 avec deux ressorts de guidage de roue 1 selon une des revendications précédentes, **caractérisée par le fait qu'**un ressort à vis 7 est disposé entre le véhicule 3 et la zone médiane du ressort de guidage de roue 1.

11. Suspension d'axe 2 avec deux ressorts de guidage de roue 1 selon une des revendications précédentes, **caractérisée par le fait que** la douille cylindrique 11 peut être pivotée sur un palier lisse contre le support de palier 31.

12. Suspension d'axe 2 avec deux ressorts de guidage de roue 1 selon une des revendications précédentes, **caractérisée par le fait que** la douille cylindrique 11 peut être pivotée sur un roulement à billes ou sur un roulement à rouleaux contre le support de palier 31.

13. Suspension d'axe 2 avec deux ressorts de guidage de roue 1 selon une des revendications précédentes, **caractérisée par le fait que** la bielle oscillante courte 6 sur le support de palier à l'arrière 31 et/ou dans la douille cylindrique à l'arrière 11 peut être pivotée sur un palier lisse.

14. Suspension d'axe 2 avec deux ressorts de guidage de roue 1 selon une des revendications précédentes, **caractérisée par le fait que** la bielle oscillante courte 6 sur le support de palier à l'arrière 31 et/ou dans la douille cylindrique à l'arrière 11 peut être pivotée sur un roulement à billes ou un roulement à rouleaux.
